## Europäisches Patentamt
## European Patent Office
## Office européen des brevets

(19)

(11) Publication number: **0 132 401**
A2

(12) # EUROPEAN PATENT APPLICATION

(21) Application number: **84304983.4**

(22) Date of filing: **23.07.84**

(51) Int. Cl.⁴: **H 04 N 7/16**

(30) Priority: **21.07.83 JP 131912/83**
**02.03.84 JP 38720/84**

(43) Date of publication of application: **30.01.85**
**Bulletin 85/5**

(84) Designated Contracting States: **DE FR GB**

(71) Applicant: **Kabushiki Kaisha Toshiba, 72, Horikawa-cho Saiwai-ku, Kawasaki-shi Kanagawa-ken 210 (JP)**

(72) Inventor: **Kamitake, Takashi, 2-20-15, Midorigaoka, Meguro-ku Tokyo (JP)**

(74) Representative: **Freed, Arthur Woolf et al, MARKS & CLERK 57-60 Lincoln's Inn Fields, London WC2A 3LS (GB)**

(54) Information transmission system.

(57) A system of transmitting an information individually and secretly is disclosed. The information to be transmitted is converted, on the transmission side, in accordance with a predetermined algorithm designated by two keys and then transmitted to a receiving side. The receiving side is supplied with at least two keys from the transmitting side for reproducing a transmitted information by using the two keys. One of the keys is frequently changed so that the algorithm is also changed frequently. Accordingly, even if non-contracted receiver gets hardware for converting the information it cannot receive the transmitted information.

EP 0 132 401 A2

## TITLE OF THE INVENTION

Information Transmission System

## BACKGROUND OF THE INVENTION

This invention relates to a system of transmitting information individually and secretly, which is especially useful for use in a pay television system or the like.

A pay television system is noted as one mode of television broadcasting. According to the pay television system a broadcasting office and television viewers (receivers) contract individual agreements so that the broadcasting office provides a specific program to a specific viewer at a prescribed rate.

In such pay television system, it is essential that, according to the agreement, only the specific viewer can receive television signals from the broadcasting office and other viewers cannot receive the television signals. According to one method of satisfying this condition the broadcasting office and the viewer constitute a closed loop system. A typical one of this method is cable television system (CATV) utilizing a coaxial cable. However, in such closed loop system as the CATV, as it is necessary to use a coaxial cable it is not only difficult to apply this system to a wide range but also the cost of installation that the viewer must pay is large.

Accordingly, an open system, for example a wireless system, is prospective in view of its flexibility. However, in the wireless system it is impossible to selectively supply electric wave to a specific viewer. Accordingly, it has been tried to scramble television video signals and then broadcast them. In the CATV where it is necessary to selectively send video signals to the contracted viewers, it is also necessary to scramble the video signals.

On the otherhand, in a computer or a commercial communication system to maintain secret the information it is essential to use cryptography. Modern cryptography is characterized in that conversion algorithm is opened to public and that only the "key" is kept secret. By opening the conversion algorithm to public, various makers can manufacture hardwares of a common specification, thus accomplishing commercial success.

Under the technical background described above, a scramble system has been proposed. See, for example, Heimbach "Securing a Satellite Distributed Television Signal". The 13th International Television Symposium, 1983. According to the scramble system, by using a scrambler installed in a broadcasting office a television signal x is rendered to be received according to some types of conversion algorithm $S(x)$ and then sent to a receiver of a viewer through an electric wave. The received signal is restored to the original signal according to an inverse conversion algorithm D(y) of a descrambler.

The conversion algorithm of the scrambler and the inverse conversion algorithm of the descrambler are specified by the key which is constituted by a bit train of a specific length. In such system, when the key on the broadcasting office side does not coincide with the key on the viewer side it becomes impossible to reproduce a picture image on a screen of a television receiving tube, whereby receiving of not contracted viewers can be prevented. Of cource, a viewer who contracted with the broadcasting office must be given with a specific key Ks.

According to this system, when the key Ks is once sent to a viewer, generally it is used semieternally or over a relatively long period, for example one month. However considering wide use of television and commercial success of the pay television system, it is considered that the receiving device of the pay television system would be sold widely in future and the descrambler could be easily purchased. If the key Ks is fixed, the key Ks is likely to be read out illegally.

To prevent this, it is desirable to change that key Ks relatively frequently. To accomplish this, it is necessary to provide means for securing

- 3 -

distribution of key to many contracted viewers instantaneously.

SUMMARY OF THE INVENTION

It is therefore an object of this invention to provide a novel transmission system capable of preventing not contracted viewers from receiving correct informations even when they purchase hardwares that can reproduce a scramble signal.

Another object of this invention is to provide a novel information transmission system capable of readily sending a key, strictly keeping secret and readily operating the system.

According to this invention there is provided an information transmitting system comprising first information converting means for converting a useful information from a source of information according to a first algorithm; second information converting means for converting a first code information according to a second algorithm designated corresponding to a second key information for forming a first key information that designates the first algorithm; transmitting means for transmitting the output of the first information converting means to receiving means; first distributing means for distributing the first code information to the receiving means; second distributing means for distributing to the

- 4 -

0132401

receiving means a second key information that designates the second algorithm; third information converting means which converts the first code information distributed by the first distributing means according to the second algorithm designated corresponding to the second key information distributed by the second distributing means so as to reproduce the first key information; and fourth information converting means which converts the output of the first information converting means transmitted by the transmitting means according to an inverse algorithm of the first algorithm designated by the first key information reproduced by the third information converting means, thereby reproducing the useful information.

The first information converting means is constituted by a scrambler and the fourth information converting means is constituted by a descrambler. The second and third information converting means are constituted by enciphers respectively. Distribution of the first code information to the receivers may be accomplished by synthesizing the first code information with the output of the first information converting means and then transmitting the synthesized information to the receiving side. The conversion algorithms of the first and fourth information converting means are renewed each time the first code information is changed. When the system of

0132401

this invention is applied to a pay television system, as the first code information is used a program code changed for each program, whereby the conversion algorithms for the first and fourth information converting means are changed for respective programs. The first code information is sent to the receiving side together with the output of the first information converting means, and the conversion algorithm for the fourth information converting means is designated corresponding to the first code information. To the transmitting side there is added a first memory means storing the second key information, and to the receiver is added a second memory means storing the second key information. A second code information corresponding to the second key is sent to the receiver individually. This transmission may be accomplished by synthesizing the second code information with the output of the first information converting means. In the receiver, the second key information is written to the second memory means in accordance with transmitted second code information. When the invention is applied to the pay television system, the content of the second memory means is limited by the agreement of the receiver, whereby the receiver can enjoy only contracted programs. In a modification, the transmitter is provided with a fifth information converting means which converts the second key information according

- 6 -

to a third algorithm designated by a third key information and the receiver is provided with a sixth information converting means which converts the output of the fifth information converting means according to the inverse algorithm of the third algorithm designated by the third key information so as to reproduce the second key information. This increases individuation and secrecy of the information transmission.

BRIEF DESCRIPTION OF THE DRAWINGS

Further objects and advantages of the invention can be more fully understood from the following detailed description taken in conjunction with the accompanying drawings in which:

Figs. 1 and 2 are block diagrams showing basic embodiments of the information transmission system according to this invention;

Fig. 3 is a block diagram showing a pay television system utilizing the information transmission system embodying the invention;

Fig. 4 is a block diagram showing another example of the pay televising system utilizing the information transmission system of this invention;

Fig. 5 shows a post card for sending encoded tier key data and used in the pay television system shown in Fig. 4;

0132401

Fig. 6 is a block diagram showing a circuit utilized in the system shown in Fig. 4 for safely collecting received information;

Fig. 7 is a block diagram showing one embodiment of this invention applied to a pulse code modulation (PCM) broadcasting;

Fig. 8 through 11 show various constructions of data formats;

Fig. 12 is a block diagram showing an embodiment of this invention applied to a bidirectional pay broadcasting system;

Figs. 13 and 14 are diagrams for explaining the embodiment shown in Fig. 12;

Fig. 15 is a block diagram showing preferred examples of the scrambler and descrambler shown in Fig. 7, and

Fig. 16 shows an embodiment of the pay broadcasting system utilizing a satellite.

DESCRIPTION OF THE PREFERRED EMBODIMENTS

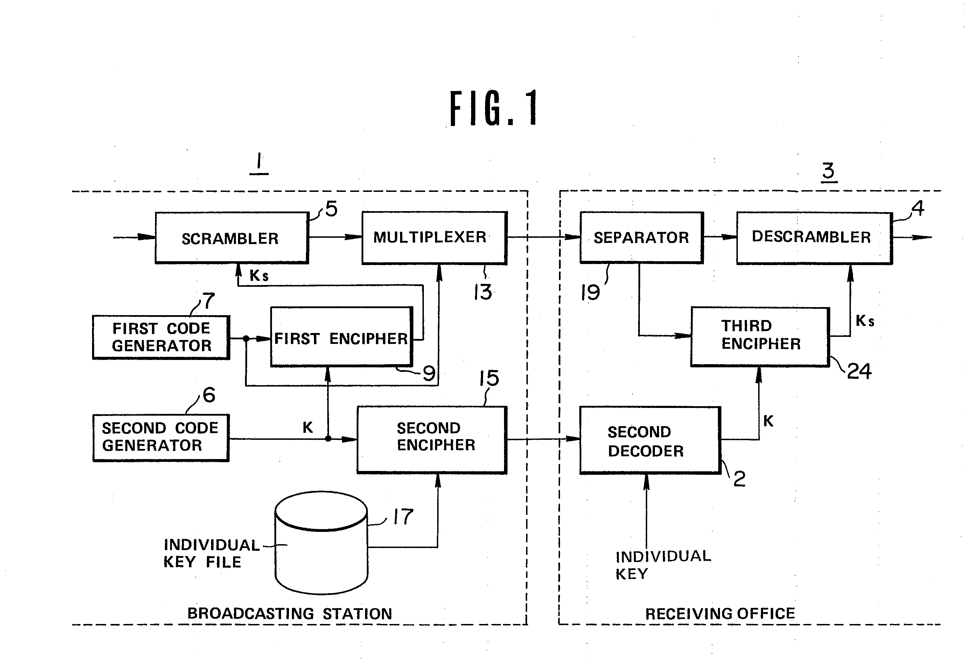

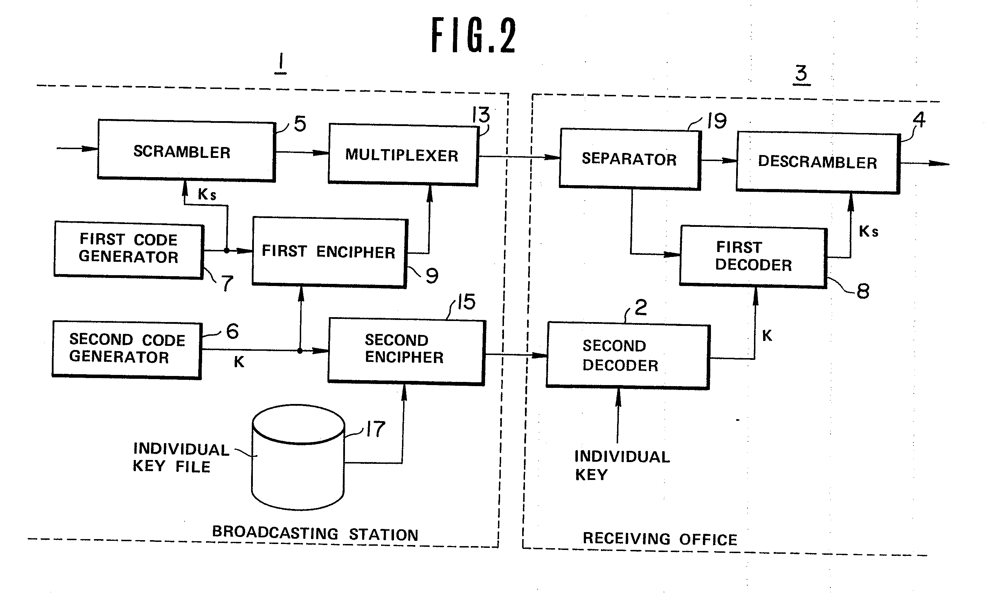

The basic embodiments of this invention will firstly be described with reference to Figs. 1 and 2. Fig. 1 shows an application of this invention to a pay broadcasting system comprising at least one broadcasting office 1 and a plurality of receiving offices 3. Informations are transmitted between the broadcasting office and the receiving offices by wire

- 8 -

or wireless transmission path. From the stand point of flexibility of the system, it is advantageous to transmit informations with wireless, that is, electric wave.

In the broadcasting office 1, a signal representing the content of a program is scrambled and then transmitted to respective receiving offices in which the scrambled signal is decoded into a useful information.

In the broadcasting station, a signal representing the content of a program (hereinafter termed a program signal) is scrambled by a scrambler 5. The purpose of scrambling is as follows. Before scrambling, the program signal is useful for the reproducing devices of a commercial television receivers, FM receivers, not shown, and when received by these receivers, the program signal is reproduced into a useful information. However, in this invention, the scrambler 5 converts or scrambles the program signal into an information that can not be used directly as the program signal. The conversion algorithm in the scrambler 5 is designated by a digital pulse train which is the output of a first encipher 9 corresponding to the input from a first code generator 7. The digital pulse train is called a key Ks of the scrambler 5.

The convertion algorithm in a first encipher 9 that is a method of changing a digital bit train is designated by a digital bit train, that is a key K generated by a second code generator. As the encipher 9 may be used an encipher according to the algorithm specified by the United States Data Eucryption Standard. The output of the first code generator 7 and the output of the scrambler 5 are multiplexed by a multiplexer 13 and then sent to respective receiving offices through a medium of electric waves.

The digital bit train K generated by the second code generator 6 is enciphered by a second encipher 15 of the broadcasting office and then transmitted to respective receiving offices 3. Like the first encipher 9 the second encipher 15 may be an encipher specified by the United States Data Eucryption Standard. Informations enciphered by the second encipher are sent to respective receivers. The enciphering algorithm of the second encipher 15 is designated by an individual key read out from an individual key file 17 which stores individual keys corresponding to respective receiving offices 3 (subscribers).

Each receiving office 3 associated with the broadcasting or sending office 1 receives a multiplexed signal sent from multiplexer 13 and includes an separator 19 that separates received multiplexed signal. The purpose of the separator 19 is to separate the scrambled signal from said first code. The separated scrambled signal is supplied to a descrambler 4 while said first code is supplied to a third encipher 24 having the same construction as that of the first encipher 9.

The signal from the second encipher of the broadcasting office 1 is supplied to a second decoder 2 of the receiving office 3. The algorithm of decoding executed by the second decoder 2 is designated by an individual key previously allocated to a specific receiving office. The indivudual key comprises a digital bit train inherent to a given receiving office and is the same as the digital bit train stored in the individual key file 17. The second encipher 15 and the second decoder 2 are designated with algorithms of an inverse function relationship by the same key. The output of the second decoder 2 is K which is the same as the output of the second code generator 6.

The output K of the second decoder 2 determines the algorithms of the third encipher 24. The first and third enciphers 9 and 24 have the same construction and execute the same algorism according to the same key. Under these conditions when the output of the first code generator 7 is supplied to a third encipher 24, the output thereof will be the same as the output Ks of the first encipher 9. This key Ks is supplied to the descrambler 4 to specify the conversion algorithm thereof. The descrambler 4 is paired with scrambler 5 so that when they are supplied with the same key they are designated with algorithms having inverse conversion relation. Under this state, when the output of the scrambler 5 is supplied to the descrambler 4, a program signal inputted to scrambler 5 can be obtained.

In the construction described above the output of the first code generator 7 is changed frequently, preferably in synchronism with the change of the program signal inputted to the scrambler 5. More particularly, each time the program is changed, the output of the code generator 7 is changed corresponding thereto. For example, the first code generator 7 is constituted by a random number generator. The signals corresponding to the changing points of the program signal are inputted to the random number generator whereby the key Ks varies for each program.

Accordingly, in the scrambler 5, the program signal is changed to different signal mode each time the program changes. Assuming that the program signal is a digital signal the scrambler 5 may have the same construction as the first encipher 9.

Where the program signal comprises an analogue signal, a plurality of analogue signal conversion modes are prepared so as to select a specific signal conversion mode by key Ks. For example, when the program signal comprises a television signal, a line rotation system may be used.

The period of the output of the second code generator 6 is set to be long compared with the period of change of the output of the first code generator 7. For example, the period is changed at a unit of one month. Thus, the key K is changed with a long period more than months.

On the other hand, the individual keys are not changed. So the content of the individual file 17 may be fixed. As for a receiving office, the individual key may be stored in ROM.

As can be understood from the foregoing description, in this embodiment three types of keys are used characterized by short, long and fixed periods of variation.

Ks is distributed to all receivers instantaneously, using the form of broadcasting distribution. This enables us to change Ks frequently for the purpose of improving Pay-TV security.

On the other hand, distribution of K requires addressability to individual receivers. K should be distributed to contracted receivers, but K should not be distributed to non-contracted receivers. Therefore, it takes somewhat long time for distribution of K. On this consideration, renewal period of K is comparatively long time such as one month.

In this invention, the lengths of code (bit number) of three keys Ks, K and Km constitute an important factor for the security of the system. Ks is secured by K, and K is secured by Km. Considering this structure, it is evident that the most important key is Km and the least important key is Ks.

Thus by increasing the number of bits of three keys in the order Ks, K and Km, not only the transmission rate can be decreased but also the degree of secrecy can be increased.

The embodiment shown in Fig. 2 will now be described. This embodiment is generally the same as that shown in Fig. 1 but differs in that the key Ks for the scrambler 5 is the output of the first code generator 5, and that the output of the first code generator 7 is sent to respective receiving offices 3 via the first encipher 9 and the multiplexer 13 together with the scrambled signal.

In accordance with such change, on the receiving office side, the third encipher 24 shown in Fig. 1 is substituted by the second decoder 2 which is an inverse conversion to the first encipher 9. With this modification, algorithms of inverse conversions are executed. Thus, the embodiment shown

- 14 -

in Fig. 2 has the same effect and function as that shown in Fig. 1.

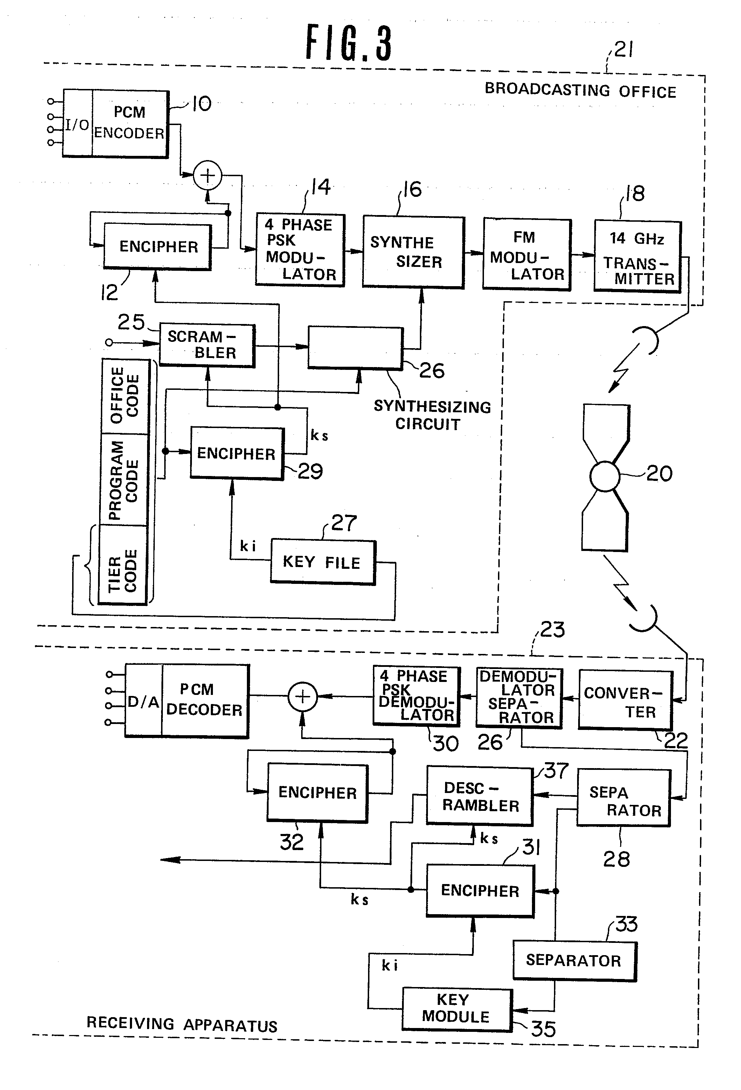

The embodiment shown in Fig. 3 shows the application of this invention to a pay television system utilizing a satellite.

Also this system is constituted by a broadcasting office 21 and many receiving apparatus 23. The television signal sent by the broadcasting office 21 is sent to receiving apparatus via the satellite. This embodiment is characterized in that each time the program of the broadcasting station is changed, the key Ks is changed.

This embodiment is also characterized in that an office code,program code and a tier code are used in addition to the television signal. The office code represents a channel which is used by its television signal, while the program code means a code applied to each program of the broadcasting office 21, and constituted by a serial number reset at each month, for example. Alternatively, this code is assigned to a category of the program (such types of program as news, sport, culture, etc.). The term tier means a designation of both an office and the category of the program as shown in the following Table 1, and represents an contract unit of the viewing of the receiver. More particularly, each section of Table 1 is the tier. The term "tier code" is a

- 15 -

code assigned to each tier.

Table I

|  | Ch1 | Ch2 | Ch3 | Ch4 | Ch5 | Ch6 | Ch7 | Ch8 | ... |
|---|---|---|---|---|---|---|---|---|---|
| news |  |  |  |  |  |  |  |  |  |
| drama |  |  |  |  |  |  |  |  |  |
| sport | ○ | ○ | ○ | ○ | ○ | ○ | ○ | ○ |  |
| culture |  |  |  |  |  |  |  |  |  |
| ⋮ |  |  |  |  |  |  |  |  |  |

Table II

|  | Ch1 | Ch2 | Ch3 | Ch4 | Ch5 | Ch6 | Ch7 | Ch8 | ... |
|---|---|---|---|---|---|---|---|---|---|
| news |  |  |  | ○ |  |  |  |  |  |
| drama |  |  |  | ○ |  |  |  |  |  |
| sport |  |  |  | ○ |  |  |  |  |  |
| culture |  |  |  | ○ |  |  |  |  |  |
| ⋮ |  |  |  |  |  |  |  |  |  |

Table III

|  | Ch1 | Ch2 | Ch3 | Ch4 | Ch5 | Ch6 | Ch7 | Ch8 | ... |
|---|---|---|---|---|---|---|---|---|---|
| news | ○ |  |  |  |  |  |  |  |  |
| drama |  |  |  |  |  |  |  |  |  |
| sport |  |  |  | ○ |  |  |  |  |  |
| culture |  |  | ○ |  |  |  |  |  |  |
| ⋮ |  |  |  |  |  |  |  |  |  |

A contract utilizing a tier will now be described. For example, when a viewer or subscriber wishes to enjoy sport programs of all offices the viewer designates the tiers shown by small circles in Table I. When the viewer wishes to enjoy all programs of channel 4, he designates as shown in Table II. Designations of a news program of channel 1, a culture program of channel 3, and a sport program of channel 4 are made as shown in Table III.

In the broadcasting station, the program code and the tier code, the tier code is supplied to the key file 27.

In the key file 27, keys defined separately corresponding to each tier are stored. The output key from the key file 27 is the key corresponding to the tier code. This key acts as a key Ki of an encipher 29 which is supplied with a bit train constituted by an office code, a program code and a tier code and performs enciphering in accordance with a conversion algorithm designated by key Ki. The output signal of the encipher 29 acts as the key Ks of the scrambler 25. The scrambler 25 scrambles the television signal in accordance with the conversion algorithm designated by the key Ks. The scrambled signal is transmitted together with a bit train constituted by an office code, a program code and a tier code.

The transmitted signal is supplied to a receiving device 23 installed on the earth via a satellite. The signal thus supplied is separated into the television signal and the bit train described above. The bit train is supplied to an encipher 31 identical to the encipher 29 in the broadcasting office 21, and an separator 33 which separates only the tier code from the bit train. The isolated tier code is supplied to a key modulator 35, the output of the key modulator 35 is the key corresponding to the tier code. This key acts as a key Ki for the encipher 31. The encipher 31 encripts the bit train in accordance with the conversion algorithm designated by the key Ki, and the enciphered signal acts as the key Ks for the descrambler 37. The descrambler restores the scrambled television signal to the original television signal according to an inverse conversion algorithm designated by the key Ks. This television signal is supplied to an ordinary reproducing device.

Parts shown in Fig. 3 will now be described in detail. The key file 27 is a memory device and the key Ki is stored in its region corresponding to an address designated by the tier code. The key Ki is a bit train having a certain length. As above described, the tier codes are codes which are set corresponding to respective section shown in Table

I - Ⅲ which the keys Ki are bit trains set corresponding to respective section.

As above described, the bit train designates the conversion algorithm of the encipher 29. Advantageously, the encipher should be constructed according to the algorithm specified in DES.

The scrambler 25 whose key Ks is constituted by the output bit train of the encipher 29 is a kind of an encipher, but where the input television signal is an analogue signal as is conventional, it interchanges the order of the scanning line. The order of interchange is designated by the key Ks. This is shown by, for example, by P.A. Heinbach "Securing a Satellite Distributed Television Signal", The 13th International Television Symposium, 1983. It should be understood, however, that the scrambler 25 is not limited to that described in this reference and that, for example, we can get the scrambler 25 having many scrambling system one of which is selected with key Ki.

Then the output of the scrambler 25, the office code, etc. are synthesized by a synthesizing circuit 26 which inserts digital signals (the office code, etc.), into the output of the scrambler 25 by utilizing a vertical flyback interval. The signal thus obtained is termed a video signal.

In the satellite broadcasting system utilizing the Japanese broadcasting satellite (BS-2), a voice transmission is achieved by digital modulation technique, and this voice transmission system is a so-called "PCM subcarrier system". According to this system, a voice signal is subjected to a phase shift keying (PSK) with subcarrier (5,727272 MHz), and this modulated voice signal is multiplexed with a video signal using frequency division multiplexing (FDM) technique.

A voice signal is passed through an A/D converter and then PCM encoded in PCM encoder 10. Thus the PCM encoded signal is subjected to enciphering. In this embodiment, this enciphering is made by taking an "exclusive or" of the PCM signal and a random series. Encipher 12 is a kind of feedback random data generator. Further, as the key for the encipher 12 is used key Ks, that is the output of the encipher.

This signal is inputted into a 4 phase PSK modulation circuit 14. The modulated signal is multiplexed with the video signal, that is the output of the synthesizing circuit 26, in the synthesizing circuit 16. The output thereof is FM modulated and then outputted from a transmitter 18 which converts its output into a microwave of 14 GHz. The microwave is supplied to the receiving device in the form of a microwave of 12 GHz via a satellite 20.

The frequency of the microwave received by the receiving apparatus 23 in converted by a converter 22. After being subjected to a FM demodulation by a demodulator, the received signal is separated into the video signal and a voice signal.

The processing of the video signal will be described first. In an separating circuit 28, the video signal is separated into a scrambled television signal and a bit train constituted by an office code, etc. The bit train is an attribute information and supplied to an encipher 31 and another separating circuit 33 which extracts only the tier code from the attribute information and supplies the extracted tier code to a key module 35, the output thereof acting as the key Ki of the encipher 31. The encipher 31 is identical to the encipher 29 in the broadcasting office 21 and encript the attribute information inputted thereto in accordance with a conversion algorithm designated by key Ki. The television signal separated by the separating circuit 28 is inversely converted into the original signal by a descrambler 37. Such inverse conversion is effected by designating the inverse conversion algorithm by the output bit train (key Ks) of the encipher 31. When supplied with the same key Ks as that supplied to the scrambler 25, the scrambler 37 is designated

0132401

with an inverse conversion algorithm opposite to the conversion algorithm for the scrambler 25.

The voice signal is demodulated into a digital signal in a 4 phase PSK demodulator 30. The digital signal and the output signal of the encipher 32 is exclusively ORed. The encipher 32 is identical to the encipher 12 in the broadcasting station and is supplied with the output of encipher 31 as the key Ks. As a consequence, the encipher 32 outputs the same output as the encipher 12. Moreover, since this output and the digital signal are exclusively ORed, the voice signal is restored to the same signal as the output of the PCM encoder 12 in the broadcasting office 10, that is the original signal. The signal is converted into an analogue voice signal by a D/A converter.

In this embodiment, the key module 35 of the receiving apparatus comprises a memory device similar to the key file and its address is designated by the tier code. But the memory content of the key module 35 is different according to the contract of each viewer so that only a key corresponding to the tier determined by the contract is efficient. For example, where a viewer contracts according to the tier designation as shown in Table I, the keys Ki corresponding to the tiers with circles are stored in the key module 35. Other keys are not stored in the key module 35. Thus, the key module 35 constitutes a partial copy of the key file 27. The module 35 is sent from the broadcasting office each time the contract is renewed. It is essential to constract the key module 35 such that its content would not be stolen. This can be realized with a known method.

As can be clear from the foregoing description, the tier code determines the key Ki for identical encipher 29 and 31. However, on the receiving apparatus side, a correct key Ki is obtained only when the receiving apparatus has a contract with the broadcasting office. Only in such case the encipher 31 operates correctly to obtain the key Ks.

As above described the descrambler 37 processes the signal according to an inverse algorithm of that of the scrambler 25, thereby obtaining the television signal.

This embodiment is characterized in that the keys Ks for the scrambler 25 and the descrambler 37 are determined by the enciphers 29 and 31 and that a signal to be enciphered is a bit train comprising an office code, a program code, and a tier code. Consequently, as the office changes, the key Ks changes and as the program changes the key Ks also changes. It is most important to note that the key Ks is changed by the program code. Accordingly, even when a not contracted person gets the descrambler 37 and succeeds to find the key with exhaustingly much time, since the key is changed each time the program is changed such stolen key would soon become ineffective, thus failing to correctly operate the descrambler 37. This is true for the voice signal, and a contractor having a correct key module 35 can reproduce correct voice.

For scrambling the voice signal, the output signal of the PCM encoder 10 may be inputted directly to the encipher. Moreover, the attribute information can be transmitted by using a digital voice channel having a spare information transmission capacity without utilizing the vertical flyback interval.

Fundamentally, the attribute signal may be set corresponding to a television signal and is not necessarily be an office code or the like.

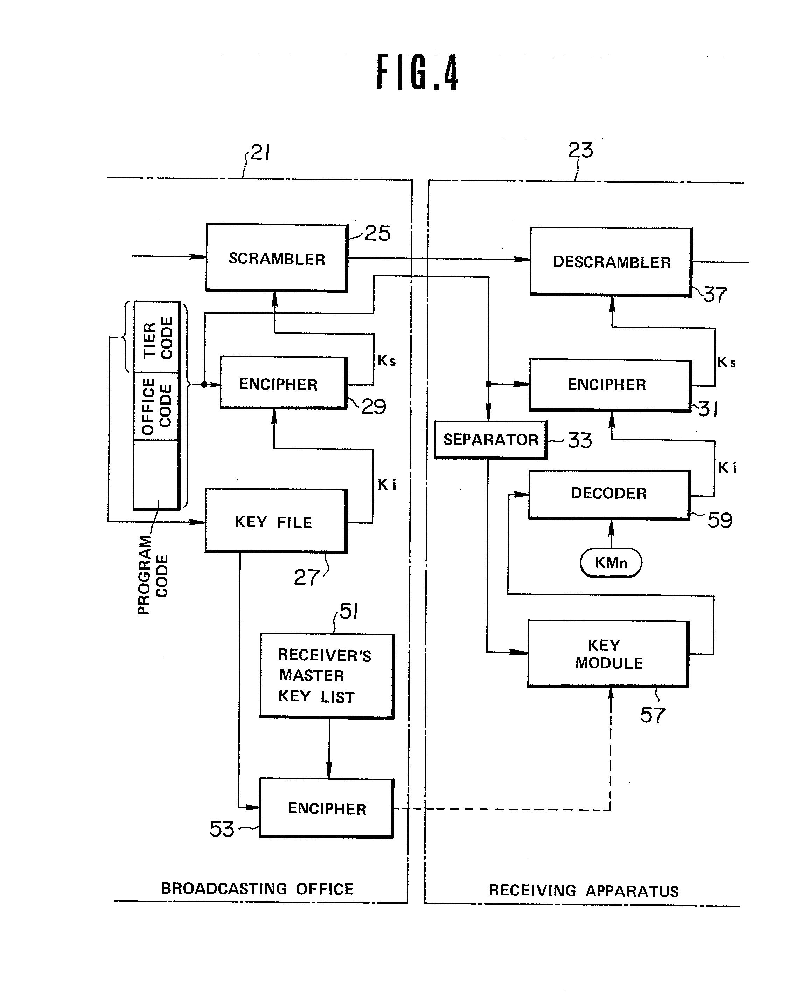

Another embodiment of this invention which improves securing will be described as follows. The modification shown in Fig. 4 is characterized in the encription of Ki on its distribution to the receiver.

The system shown in Fig. 4 includes a receiver's master key file 51 in which each receiver's master key is stored and a bit train representing the receiver's master key KMn corresponding to the contractor. A receiver's master key KMn is read out from the receiver's master key file 51 in accordance with ID number of a contractor. The receiver's master key KMn designates the conversion algorism for an encipher 53. When the conversion algorism is designated in this manner, the encipher 53 encripts the key Ki outputted from the key file 27, the key Ki being the key for the encipher 29 of the embodiment shown in Fig. 3.

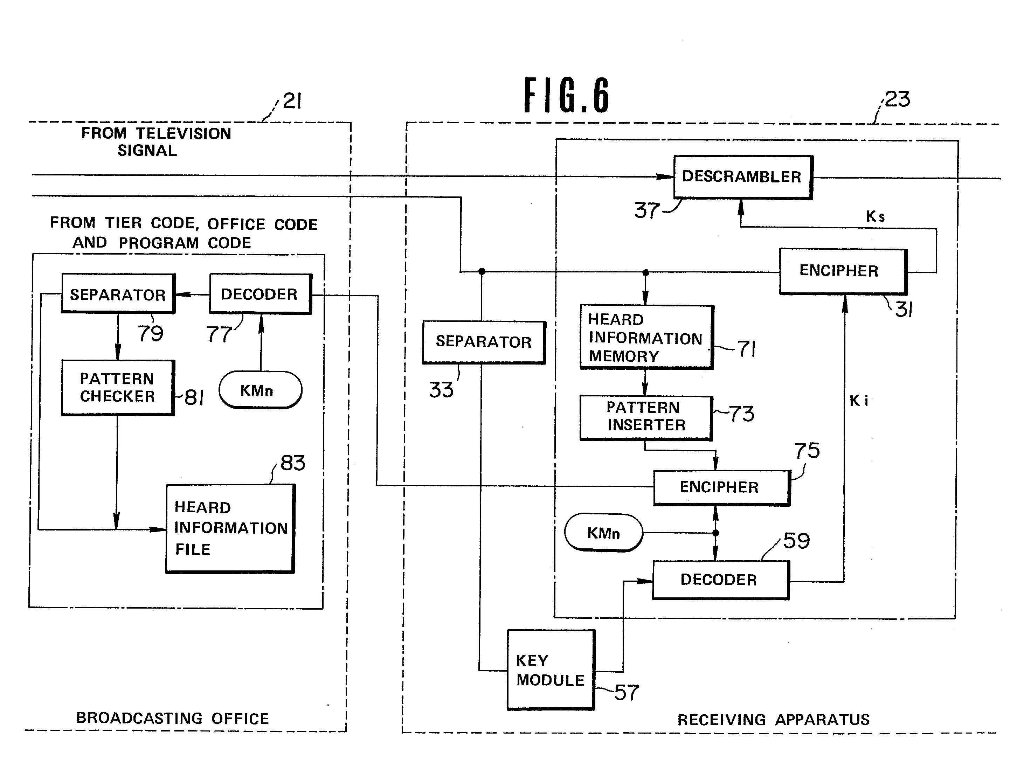

The enciphered key Ki is sent to respective contractors. As one mode thereof a magnetic stripe 5 is formed on one portion of the rear side of a post card 52 or a sheet of paper having an equivalent size, as shown in Fig. 5. The magnetic card stores the enciphered key Ki. In this modified system too, in the broadcasting station 21, the content of the key file 27 is renewed every month. Corresponding to this renewal the enciphered key Ki is also renewed every month so that new cards 52 are mailed to the contractors. This expedient increases the degree of secrecy as will be described later. Furthermore, each post card 52 is provided with an information column 55 in addition to the magnetic striple 53, the information column 55 being used to write various informations including communication from the broadcasting office 21, pay of fee, accurate account, etc. As above described the post card 52 is used to effect communication and sending of the enciphered key.

The operations performed between key file 27 and scrambler 25 are similar to those of the previous embodiment. Thus, the television signal TV is sent to receivers (not shown) of the receiving apparatus of respective contractors via the transmitter and a satellite (not shown).

The scrambled signal is supplied to a descrambler 37, whereas a signal corresponding to a bit train of the tier code, or the like is sent to a decoder 31 and a separator 33.

The separator 33 separates and outputs only the tier code from the bit train, and the output, that is the tier code is supplied to a key module 57 which stores informations written into the magnetic stripe 5 coated on the post card 52, so as to output a bit train corresponding to the tier code. This bit train is the corresponding code of Ki enciphered by the encipher 53 of the broadcasting office.

The enciphered key Ki is decoded into the original key Ki by a decoder 59. However, the inverse conversion algorism of the decoder 59 is designated by the receiver's master key KMn set to each receiver. For this reason, the receiver cannot obtain the key Ki unless he knows master key KMn.

In the same manner as in the foregoing embodiment, the key Ki thus obtained designates the conversion algorism of the encipher 31 so as to obtain Key Ks. Under the designation of this key Ks, the descrambler executes an inverse conversion for obtaining a television signal suitable for reproduction.

This embodiment is characterized in that, risks are concentrated to the receiver's master key KMn. In other words, so long as only the receiver's master key is protected safely, the secrecy of the entire system can be safe guarded even though other parts are not strictly protected. This not only simplifies the manifacturing steps of the descrambler but also decreases manufacturing cost thereof. The receiver's mask key can be well protected by storing it in a perfectly sealed strong box.

A system for obtaining an audience information important to the pay television system will be described.

As shown in Fig. 6, a circuit for collecting the audience information is provided for the receiving apparatus 23 and circuit for collecting informations collected by respective receiving apparatus is provided for the broadcasting office 21. As will be described hereinbelow, this system is characterized in that the audience information is not changed intentionally.

In the receiving apparatus 23, an office code, a program code or the like are stored in an audience information memory device 71, which is constructed to store informations only when a television program is reproduced by a receiver according to the contract.

When the memorized content of the audience information memory device 71 reaches a predetermined quantity or where a predetermined period has elaspsed, the content of the audience information memory device 71 is sent to the broadcasting office. In the receiving apparatus 23, the audience information is sent to a pattern inserter 73 which adds a fixed pattern and a date (year, month, day) pattern to the audience information. The date pattern represents a date at which the audience information is sent to the broadcasting office 21. Such added is formation are encripted by an encipher 75. The conversion algorithm of encipher is designated by the receiver's master key KMn. Accordingly, the audience information added with the fixed pattern and the date pattern would be subjected to encripting specific to a receiver. The audience information is sent to the broadcasting office 21 via a telephone line or the like. The information is decoded by a decoder 77 in the broadcasting office according to an inverse conversion algorithm designated by the receiver's master key KMn. For this reason, the output from decoder 77 is a digital signal comprising the audience information, the fixed pattern and the data pattern. This signal is separated into the audience information, the fixed pattern, and the data pattern by a separator 79. Whether the fixed pattern and the "date pattern" are correct or not is judged by a pattern checker 81. Of course, the term date pattern means the date at which the audience information is collected by the broadcasting office 21. The pattern checker 81 compares the pattern kept in the broadcasting office 21 with the fixed pattern sent from the receiving apparatus 23 so as to check whether they coincide with each other or not. When the fixed pattern is correct, it is stored in a audience information file 83 for each contractor. Where a signal separated from a net audience information is different from a common pattern (fixed pattern and date pattern) prepared by the broadcasting office 21, the signal is not recognized as a correct audience information so that it is not stored in the audience information file 83.

With these construction and operation, even when a contractor alternates a signal outputted from the receiving apparatus (signal from decoder) so as to send an incorrect audience information to the broadcasting office 21, the pattern checker 81 can readily detect the fact that such audience information is a false information.  Even when a contractor preserves the data of a month in which the number of audience informations is small, and when the contractor sends such data to the broadcasting office instead of true data, such data can readily be detected as false data in view of the date pattern.

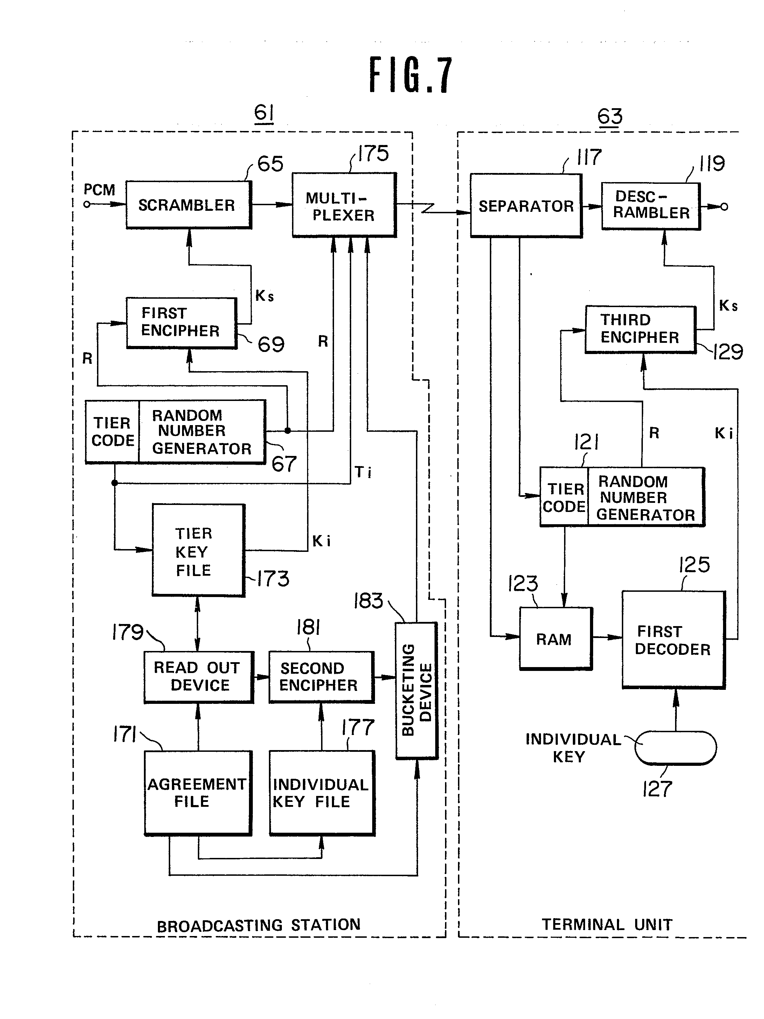

Another embodiment shown in Fig. 7 will now be described in which a PCM voice is broadcast.

More particularly, a PCM voice is transmitted to a plurality of terminal units 63 from a broadcasting station.  A PCM signal is supplied to a scrambler 65 from a source of a PCM voice source, not shown.  One example of the construction of a scrambler will be described later.  The data conversion algorithm of the scrambler 65 is designated by the output (which is called a key Ks) of a first encipher 69 driven by a random number generator 67.

This first encipher 69 converts its input signal in accordance with a conversion algorism designated by the key Ki.  This key Ki utilizes a tier key corresponding to a tier code.  As above described, the term "tier" means designation of the category of the program and the channel.

The supervisory information of the contract is stored in a contract file memory device 171. The memory content comprises ID numbers assigned to respective contractors, all tier codes regarding programs wanted to listen by contractors, and the number n of the tier codes. For example, where a contractor of an ID number 1 has made a contract for listening programs of tier codes $T_1$ and $T_2$, the content of the contract file memory device 171 is (ID=1, n=2, $T_1$, $T_2$). Such content is established for all contractors.

As above described, such tier code is assigned to each program and supplied as an address of a tier key file 173 which may be a RAM for storing a tier key Ki regarding a tier code Ti.

The output of the random number generator 67 is supplied to a multiplexer 175 together with a scramble signal. The tier key Ki is enciphered in the following manner. More particularly, at first the tier code Ti is read out from the contract file memory device 171 with reference to a specific ID number, and a tier key Ki corresponding to a tier code Ti is read out from the tier key file 173 under the control of a read out device 179. An individual key file 177 may be a RAM which stores ID numbers and corresponding individual keys. Consequently the individual key file 177 outputs an individual key KMn corresponding to a specific ID number, the key KMn being used to encipher a tier key Ki with a second encipher 81, whereby an ID number is read out from the contract file and supplied to a packeting device 183.

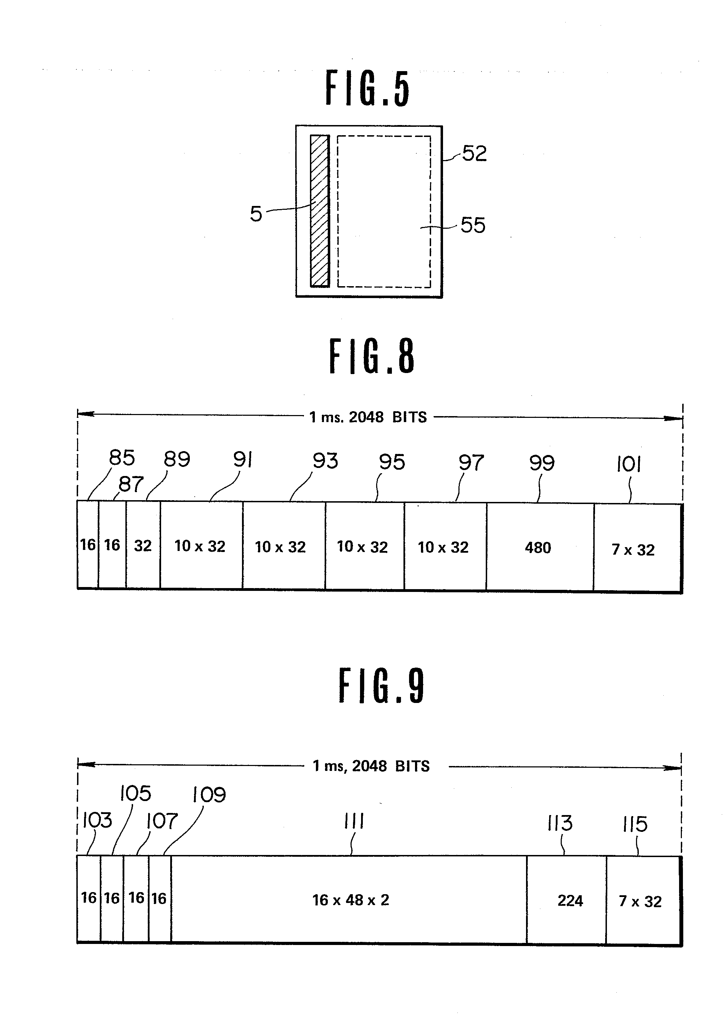

The output of the multiplexer 175 is radiated as an electric wave through a transmitting apparatus, not shown. As the voice signal modes A mode and B mode are determined for the Japanese satellite broadcasting by the Japanese electric wave technical deliberative council, as shown in Figs. 8 and 9. In both modes one frame is constituted by 2048 bits having a period of 1 ms. As shown in Fig. 8, the frame of mode A comprises a 16 bit frame period signal 85, a 16 bit control signal 87, a 32 bit range bit signal 89, channel voice signals 91, 93, 95 and 97 of 10 x 32 bits respectively, an independent data 99 of 480 bits, and an error correction signal 101 of 7 x 32 bits. In the same manner, the frame of mode B comprises a frame synchronizing signal 103 of 16 bits a control signal 105, a range bit 107 and independent data 109 respectively having 16 bits, a voice signal 111 for two channels each having 16 x 48 bits, an independent data of 224 bits, and an error correction code 115 having 7 x 32 bits.

With the frame construction described above, a scrambled signal is assigned to voices 91, 93, 97, 99

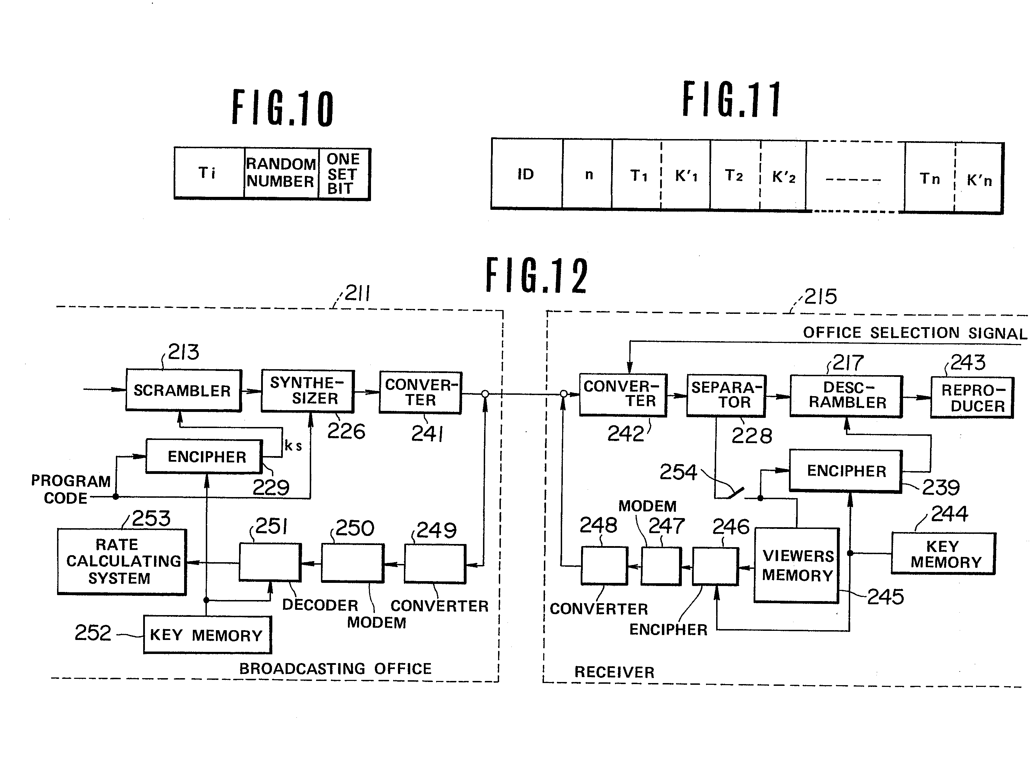

and 111 and various data described above are assigned to independent data 99, 109 and 113 according to the following format. Thus a tier code Ti corresponding to a program now being broadcast, a random number R at that time, and a reset bit to be described later are constantly transmitted to all contractors or receivers during broadcasting. In contrast, the tier key Ki is sent individually using a long time. More particularly, as shown in Fig. 11 the distribution code takes the format including an ID number identifying a contactor, the number of tier codes (the number of contracted programs), contracted $T_1$, $T_2$ ... Tn and enciphered keys, that is $K'_1$, $K'_2$ ... K'n corresponding thereto.

Such distribution code may be transmitted at the time of contract, and when the tier keys are renewed the distribution code may be sent to the contractor before the tier keys becomes effective (that is, the contract becomes effective).

As above described informations are transmitted to respective terminal units from the broadcasting office 61 as electric waves. Then separator 117 separates the data of the aforementioned frame construction into voices 91, 93, 95, 97 and 111, a common code shown in Fig. 10, and a distribution code shown in Fig. 11. Such separation can readily be made by establishing synchronism.

The voices 91, 93, 95, 97 and 111 are supplied to a descrambler 119. The common code is stored in a memory device. The distribution code is compared with an ID number set for each terminal unit and only the code of the same ID number is selected and stored in a memory device 123. More particularly, the content of this memory device is different for each contractor and a tier code Ti for an effective contract and data obtained by enciphering a tier key Ki corresponding to the tier code Ti are stored in the memory device 123. As a consequence, even if a not contracted person gets these data, such data are of no use.

Then a check is made whether the tier code Ti corresponding to a program now being received exists in the content of the memory device 123 or not. Where the same tier code Ti presents, it is confirmed that the contractor now receiving has contracted the program. At the same time, the enciphered Ki is read out from the memory device 123, and supplied to a first decoder 125.

This first decoder 125 corresponds to the second encipher 81 and is designated to an inverse conversion algorism by the same key. In the terminal unit 63, key KMn is stored in a ROM 127 and this key is used as a key for the first decoder 125.

Thus, the output of the first decoder 125 becomes the key Ki which is used as a key for a third encipher 129 which is inputted with the random data stored in the memory device 121. Consequently, the input and key of the third encipher 129 are the same as those of the first encipher 69. Since the first and third encoders 69 and 129 have the same construction, the same key Ks can be obtained in the broadcasting office 61 and the terminal unit 63.

When this key Ks is supplied to a descrambler 119 to act as a key, the scramble of the PCM signal is released, thus producing an original PCM signal, which is supplied to a reproducing apparatus, not shown, thereby enabling the contractor to enjoy broadcasting.

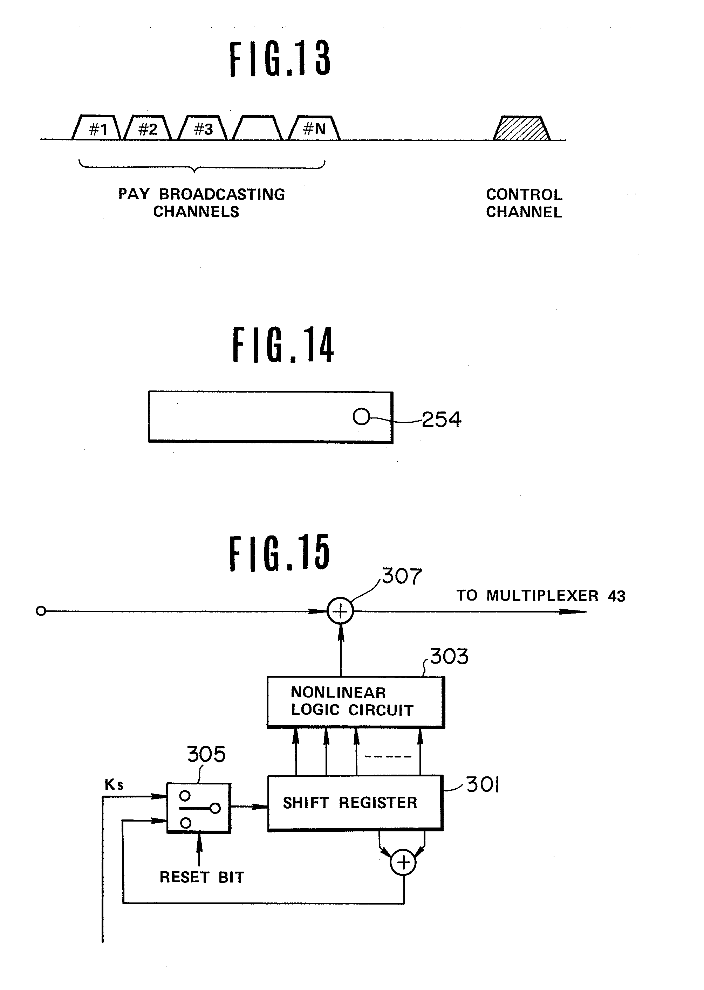

Concrete examples of the scrambler 65 and the descrambler 119 are as follows. More simple examples than DES will be described herein. As shown in Fig. 15, the descrambler 65 comprises a shift register 301 and a nonlinear logic circuit 303. More particularly, at the start of a program (at the time of changing it) a switch 305 is designated for sequentially storing a key Ks (a digital signal) in a shift register 301. When the whole key has been stored, the switch 305 is transferred to cause the content of shift register 301 to circulate according to a clock signal. Data of a plurality of predetermined address of the shift register 301 are exclusively ORed to form a new input to the shift register 301.

The content of the shift register 301 is subjected to a logical operation by using a nonlinear logic circuit constituted by a plurality of AND gate circuits and an exclusive OR gate circuit, so that this circuit calculates a logical product of the data of predetermined addresses and then the logical products are ORed.

When the output data of the nonlinear logic circuit 303 and the original PCM signal are exclusively ORed by an exclusive OR gate circuit 307, the signal can be scrambled. A descrambler has the same construction except that the input to the exclusive OR gate circuit 301 is not the PCM signal but a scrambled signal.

The reset bit will further be described. The reset bit is used for synchronizing the scrambler 65 and the descrambler 119. More particularly, each time a reset bit is received, a digital signal representing a key Ks is supplied. As above described, since one frame has a period of 1 ms, the reset bit is supplied to the terminal device 63 at each 1 ms. From this reason, even when the power switch of the terminal unit 63 is ONed independently of the progress of the programs the states of the scrambler 65 and the descrambler 119 become the same, whereby at the terminal unit 63 a correct program signal can be obtained. As above described, a reset bit is constantly supplied to the terminal unit 63 as the common code, the operation of the terminal unit 63 becomes accurate and readily.

Another modification of this invention will be described with reference to Fig. 12 which relates to a pay television system utilizing a bidirection CATV.

The basic concept of this modification is as follows. The receiver may be massproduced by many makers, so that it is impossible to make secret the design of the receiver. As a consequence, in this embodiment, it is assumed that the construction of the receiver is well known. Accordingly, the secrecy of the system is kept by keeping secret a digital information (key) necessary to descramble the television signal. It is herein assumed that the receiver is leased to a subscriber by the broadcasting office. In this case, before leasing the receiver, the broadcasting office sets a key in each receiver.

The construction of the broadcasting office 211 is as follows. In this embodiment, the key of the scrambler is obtained by enciphering a program code (which is considered as the attribute code). In other words, a program code is supplied to an encipher 229 and its output Ks is utilized as the key of the scrambler 213 scrambling a television signal according to a conversion algorism designated by the key Ks. The scrambled signal is synthesized with the program code by a synthesizer 226 and is modulated to a carrier frequency band by a converter 241 to be transmitted.

The transmitted signal is supplied to a receiving apparatus 215 via a cable. The received signal is demodulated to a baseband signal by a converter 242 and then separated into the television signal and the program code by a separator 228. The program code is supplied to an encipher 289 via a viewing and hearing switch 254. Since encipher 239 has the same construction as the encipher 229 in the broadcasting station, the output of the encipher 289 is the same key Ks as in the broadcasting office. A descrambler 217 is provided to restore the scrambled television signal to the original television signal according to an inverse conversion algorism designated by the key Ks. The television signal is supplied to a conventional reproducing device.

The switch 254 is used by the contractor to select a desired program. Thus, by closing this switch the program code is supplied to the encipher 239 thereby enabling to enjoy a desired program. At the same time, the program code is stored in an audience memory device 254, the program code stored therein representing an actually enjoyed program code, that is heard and viewed information. As shown in Fig. 14, the switch 254 is mounted on the front surface of a decoder, so that when the contractor wishes to enjoy the broadcast program, he pushes this button.

A key stored in a key memory device 244 is the secret key described above. After setting the same key K in the key memory device 244 in the receiver as that set in a key memory device 252 in the broadcasting office, the broadcasting office leases the receiver. From this, enciphers 239 and 229 of the receiver and the transmitting office can perform the same operation, and the descrambler 217 can perform a correct operation.

Since a false receiver is not provided with this secret key, such receiver can not operate correctly. Thus, even when the design of the receiver is opened to the public, so long as the key is kept secret, unjustified hearing and viewing can be prevented. To prevent the secret key from being stolen from the decoder, it is necessary to seal the box of the receiver.

A method of transmitting an audience information stored in an audience memory device 245 of each receiver 215 to the broadcasting office will now be described. Generally, the audience information is also transmitted to the broadcasting office through a cable. The audience information in the

- 39 -

memory device 245 is enciphed by an encipher 246 utilizing the secret key K. This information is modulated by a modem 247 and is up converted to a carrier band by a converter 248 and then sent to the broadcasting officer 211 through a specific channel shown in Fig. 13.

The transmitted information is restored to a binary information by a converter 247 and a modem 250 in the broadcasting office, whereby the original audience information is decoded with a decoder 251 utilizing the secret key K. This restored information is supplied to a rate calculating system 253 for calculating rates for respective subscribers. When calculating the rates, they may be set for respective programs or for all programs as a whole.

Various component parts will now be described briefly. As enciphers 229 and 239 may be used enciphers utilizing to algorisms of U.S. Data Encryption Standard.

Where a television signal in the form of an analogue signal as has been the practice is inputted to descrambler, the order of the scanning lines is interchanged, the order of interchanging being designated by the key Ks.

The synthesizer 226 is sued to insert a program code in the form of a digital signal into the output of the scrambler 213 by using the vertical flyback interval.

It should be understood that the constructions of various elements are not limited to those described above and that they can be modified variously without departing the scope of this invention.

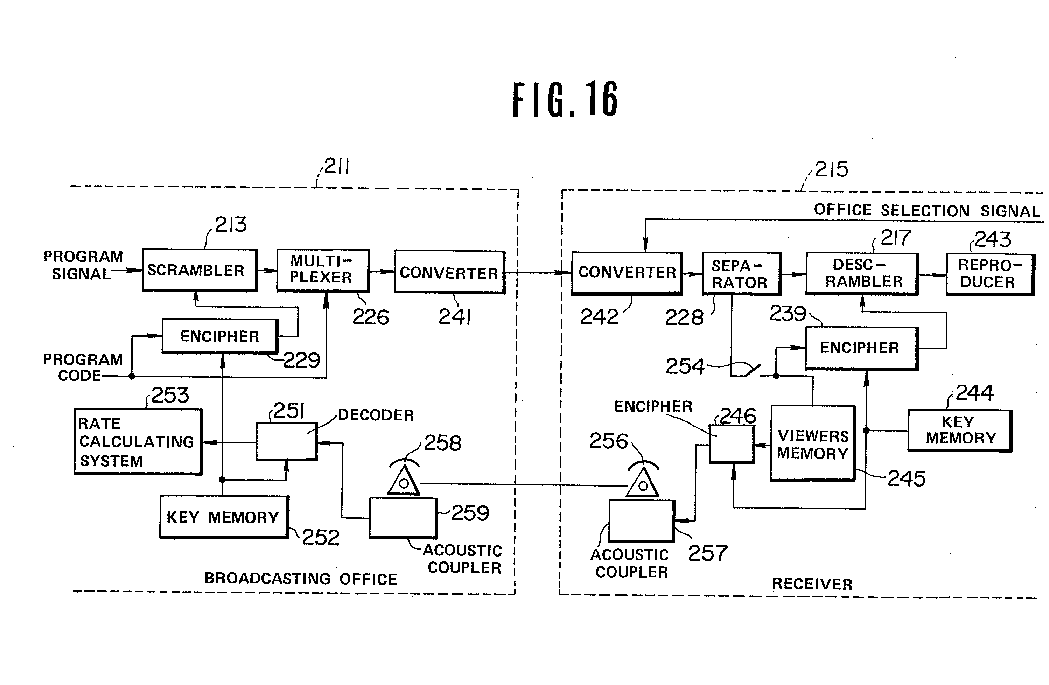

In future, it is expected that a pay-per-view broadcasting system utilizing a satellite for directly receiving broadcast informations will be used widely. Since the satellite broadcasting system is uni directional, it is impossible to feed back the audience information. A modified embodiment in which informations are transmitted by telephone is shown in Fig. 16 in which elements utilized to transmit the audience information are identical to those of the previous embodiments so that they will not be described again. In the same manner as in the previous embodiment, the audience information stored in the audience memory device 245 is enciphered by an encipher utilizing the secret key K. Then the enciphered information is applied to public telephone lines through the acoustic coupler 257 and a telephone set 256. In the broadcasting office 251, the received information is restored to a binary information by a telephone set and an acoustic coupler, and the original audience information is produced by a decoder 251 utilizing the secret key K. The information thus decoded is supplied to a rate calculating system 253 to calculate the rate for each subscriber. Instead of using a telephone system, the audience information may be recorded on a magnetic card or an IC card and such card may be mailed to the broadcasting office without departing from the true spirit of this invention.

Where the transmitted signal is a television signal, the scrambler and descrambler may be constructed such that the order of transmission is changed by taking the scanning line as a unit. In this case, the key information Ks designates the order of transmission.

Where the signal to be transmitted is a digital signal, each of the scrambler and the descrambler may be constituted by a M series generator and an exclusive OR gate circuit inputted with a binary series generated by the M series generator and an input digital signal. In this case, the key information Ks is utilized as the initial value of the M series generator.

It should be understood that the invention is not limited to the specific embodiments described above and that many change and modifications will be obvious to one skilled in the art.

WHAT IS CLAIMED IS

1. An information transmission system comprising:

first information converting means for converting
a useful information from a source of information according
to a first algorithm;

second information converting means converting
a first code information according to a second algorithm
designated corresponding to a second key information into
a first key information that designates said algorithm;

transmitting means for transmitting an output
of said first information converting means to receiving
means;

first distributing means for distributing said
first code information to said receiving means;

second distributing means for distributing
to said receiving means said second key information
that designates said second algorithm;

third information converting means which converts
said first code information distributed by said first
distributing means according to said second algorithm
designated corresponding to said second key information
distributd by said second distributing means so as
to reproduce said first key information;
and

fourth information converting means which
converts the output of said first information converting

- 43 -

0132401

means transmitted by said transmitting means according to an inverse algorithm of said first algorithm designated by said first key information reproduced by said third information converting means, thereby reproducing said useful information.

2. The information converting system according to claim 1 wherein said first information converting means comprises a scrambler, while said fourth information converting means comprises a descrambler.

3. The information transmitting system according to claim 1 wherein each of said second and third information converting means comprises an encipher.

4. The information transmitting system according to claim 1 wherein said transmitting means transmits the output of said first information converting means to said receiving means through wireless.

5. The information transmitting system according to claim 1 whrein said transmitting means transmits the output of said first information converting means via electric conductors.

6. The information transmitting system according to claim 1 wherein said first distributing means

- 44 -

distributes said first code information to said receiving means by using the same communication medium as said transmitting means.


7.  The information transmitting system according to claim 1 wherein said second distributing means writes said second key information into memory means and distributes said written key information to said receiving means.


8.  The information transmitting system according to claim 1 wherein said second distributing means distributes said second key information to said receiving means by using the same communication medium as said transmitting means.


9.  The information transmitting system according to claim 1 which further comprises a first memory means installed on the transmitting side for storing said second key information corresponding to said second code information, a second memory means provided for said receiving means for storing said second key information corresponding to said second code information, means for transmitting to said receiving means said second code information together with the output of said first information converting means, and means provided for said receiving means for reading out said second key information from said second memory means
in accordance with said transmitted second code information.

10. The information transmitting system according
to claim 9 wherein said second memory means stores
said second key information only in accordance with
a specific code signal corresponding to said receiving
means among said second code signal.

11. The information transmitting system according
to claim 1 wherein said source of information produces
a television signal to be broadcast, and wherein said
receiving means comprises a plurality of receiving
offices which respectively receive said television
signal for reproducing a picture.

12. The information transmitting system according
to claim 11 wherein said first code information comprises
an attribute signal representing an attribute of said
television signal.

13. The information transmitting system according
to claim 11 wherein said attribute signal comprises
a code information selected from the group consisting
of an office code identifying an office, a program
code identifying a program and a tier code identifying a tier.

14. The information transmitting system according to claim 9 wherein said source of information produces a television signal to be broadcast, and said receiving means comprises a plurality of receiving offices which respectively receive said television signal for reproducing a predetermined picture image.

15. The information transmittting system according to claim 9 wherein said first code information comprises a first attribute signal representing a first attribute of said television signal, and said second code information comprises a second attribute signal representing a second attribute of said television signal.

16. The information transmission system according to claim 9 wherein said first attribute signal comprises an office code identifying an office, a program code identifying a program, and a tier code identifying a tier, whereas said second attribute signal comprises a tier code identifying a tier.

17. The information transmitting system according to claim 1 wherein said first code information is generated by a random number generator.

18. The information transmitting system according to claim 1 wherein said first key information is renewed at a higher rate than said second key information.

19. The information transmitting system according to claim 1 wherein said first information converting means changes an order of transmission of said television signal in an unit of a scanning line.

20. The information transmitting system according to claim 16 further comprising means provided on the transmission side for synthesizing and transmitting the output of said first information converting means, an office code, a program code and a tier code, a first separating means provided for said receiving means for separating the output of said first information converting means from a synthesized signal synthesized and transmitted by said synthesizing an transmitting means, and a second separating means also provided for said receiving means for extracting said tier code out of said office code, said program code and said tier code.

21. The information transmitting system according to claim 1 which further comprises a fifth information converting means provided on the transmission side for converting said second key information in accordance with a third algorithm designated by a third key information, and a sixth information converting means for
converting an output of said fifth information converting
means in accordance with an inverse algorithm of the
third algorithm designated by said third key information
so as to reproduce said second key information.

22.   The information transmitting system according
to claim 22 wherein said third key information is
set corresponding to each receiving means.

23.   The information transmitting system according
to claim 22 wherein bit lengths of said first, second
and third key informations are set to sequentially
increase according to the order mentioned.

24.   The information transmitting system according
to claim 1 which is further provided with:
     on the transmitting side,
     first memory means for storing a second key
information corresponding to said second code information,
     fifth information converting means for converting
said second key information read out from said first
memory means in accordance with a third algorithm designated
by a third key information, and
     transmitting means for transmitting to said
receiving means said second code information and the
output of said fifth information converting means together
with the output of said  first information converting means,

and on the receiving side,

second memory means for storing the output of
said fifth information converting means transmitted
from the transmitting side

reading means for reading out the output of
said fifth information converting means from said second
memory means corresponding to said second code information transmitted from the transmitting side, and

sixth information converting means for converting
the output of said fifth information converting means
read out by said reading means in accordance with an
inverse algorithm of the third algorism designated
by said third key information so as to reproduce said
second key information.


25. The information transmitting system according
to claim 1 wherein said receiving means further comprises
memory means storing a received information representing
a received information, pattern inserting means for
inserting a predetermied pattern information into
a receiving information read out from said memory
means, a seventh information converting means for
converting an output of said pattern inserting means
in accordance with a predetermined algorithm, and means
for distributing an output of said seventh information
converting means to said transmitting side, and wherein
said transmitting means further comprises an eighth
information converting means converting an output of
said seventh converting means distributed by said distributing means acccording to an inverse algorithm of said predetermined algorithm, means for separating said inserted predetermined pattern information from an output of said eighth information converting means, pattern checking means for checking whether said separated pattern information is correct or not, and means for recording a received information in acccordance with an output of said pattern checking means.

26. The information transmitting system according to claim 25 wherein the pattern information inserted by said pattern inserting means comprises a predetermined fixed pattern and a date pattern.

27. The information transmitting system according to claim 25 wherein said algorithm used in said seventh information converting means and said inverse algorithm used in said eighth information converting means are designated by said third key information.

28. The information transmitting system according to claim 25 wherein said distributing means transmits an output of said seventh information converting means to said transmitting side by using the same transmission medium as said transmitting means.

29. The information transmitting means according to claim 25 wherein said distributing means sends to transmitting side an output of said seventh information converting means via telephone lines.

30. In an information transmitting system of the type comprising first signal converting means for converting a useful signal generated by a signal source in accordance with a first algorithm, first means for transmitting an output of said first signal converting means to a purality of receiving means, and a second signal converting means for receiving the transmitted signal and then converting the signal into said useful signal, the improvement which comprises:

third signal converting means that converts a first key information designating said first algorithm in accordance with a second algorithm;

fourth signal converting means for converting a second key information designating said second algorithm utilized in said third signal converting means in acccordance with a third algorithm;

second means for distributing outputs of said third and fourth signal converting means to respective receiving means;

fifth signal converting means for converting an output of said fourth signal converting means sent by said distributing means into said second key information in accordance with an inverse algorithm of said third algorithm;

sixth signal converting means for inverting an output of said third signal converitng means into said first key information by using said second key obtained by said fifth signal converting means, and

means for operating said second signal converting means in accordance with an information produced by said sixth signal converting means.


31. The information transmitting system according to claim 30 wherein a third key information designating said third algorithm is set in accordance with said receiving means.


32. The information transmitting system according to claim 30 wherein bit lenghths of said first, second and third key information are set to become sequentially large according to the order just mentioned.


33. The information transmitting system according to claim 30 wherein said second means comprises third and fourth means independently distributing outputs of said third and fourth signal converting means.


34. The information transmitting system according to claim 30 wherein said first and third means utilize the same communication medium.

0132401

35.   The information transmitting means according
to claim 30 wherein said first, third and fourth means
utilize the same communication medium.

- 54 -

# FIG.1

**BROADCASTING STATION** (1)
- SCRAMBLER (5) — Ks
- MULTIPLEXER (13)
- FIRST CODE GENERATOR (7)
- FIRST ENCIPHER (9)
- SECOND CODE GENERATOR (6) — K
- SECOND ENCIPHER (15)
- INDIVIDUAL KEY FILE (17)

**RECEIVING OFFICE** (3)
- SEPARATOR (19)
- DESCRAMBLER (4)
- THIRD ENCIPHER (24) — Ks
- SECOND DECODER (2) — K
- INDIVIDUAL KEY

# FIG.2

**BROADCASTING STATION** | **RECEIVING OFFICE**

SCRAMBLER 5 → MULTIPLEXER 13 → SEPARATOR 19 → DESCRAMBLER 4

FIRST CODE GENERATOR 7 → FIRST ENCIPHER 9 (Ks)

SECOND CODE GENERATOR 6 (K) → SECOND ENCIPHER 15

INDIVIDUAL KEY FILE 17

FIRST DECODER 8 (Ks)

SECOND DECODER 2 (K)

INDIVIDUAL KEY

0132401

# FIG.3

BROADCASTING OFFICE

RECEIVING APPARATUS

# FIG.4

BROADCASTING OFFICE          RECEIVING APPARATUS

# FIG.6

FROM TELEVISION SIGNAL

FROM TIER CODE, OFFICE CODE AND PROGRAM CODE

DESCRAMBLER 37

Ks

ENCIPHER 31

SEPARATOR 79   DECODER 77'   KMn

SEPARATOR 33

HEARD INFORMATION MEMORY 71

PATTERN CHECKER 81

PATTERN INSERTER 73

HEARD INFORMATION FILE 83

ENCIPHER 75

KMn

DECODER 59

Ki

KEY MODULE 57

BROADCASTING OFFICE

RECEIVING APPARATUS

21   23

# FIG.7

0132401

# FIG.5

# FIG.8

| | | | | | | | | |
|---|---|---|---|---|---|---|---|---|
| 16 | 16 | 32 | 10 x 32 | 10 x 32 | 10 x 32 | 10 x 32 | 480 | 7 x 32 |

1 ms. 2048 BITS

85  87  89  91  93  95  97  99  101

# FIG.9

| | | | | | | |
|---|---|---|---|---|---|---|
| 16 | 16 | 16 | 16 | 16 x 48 x 2 | 224 | 7 x 32 |

1 ms, 2048 BITS

103  105  107  109  111  113  115

# FIG.10

| Ti | RANDOM NUMBER | ONE SET BIT |
|----|----|----|

# FIG.11

| ID | n | T₁ | K'₁ | T₂ | K'₂ | ----- | Tn | K'n |

$$\text{FIG.10} \quad | \; T_i \; | \; \text{RANDOM NUMBER} \; | \; \text{ONE SET BIT} \; |$$

$$\text{FIG.11} \quad | \; ID \; | \; n \; | \; T_1 \; | \; K'_1 \; | \; T_2 \; | \; K'_2 \; | \; ----- \; | \; T_n \; | \; K'_n \; |$$

# FIG.12

OFFICE SELECTION SIGNAL

BROADCASTING OFFICE — 211
213 SCRAMBLER → SYNTHESIZER (226) → CONVERTER (241)
ENCIPHER (229) ks
PROGRAM CODE
RATE CALCULATING SYSTEM (253)
251 — DECODER MODEM (250) — CONVERTER MODEM (249)
252 — KEY MEMORY

RECEIVER — 215
CONVERTER (242) → SEPARATOR (228) → DESCRAMBLER (217) → REPRODUCER (243)
ENCIPHER (239)
254
248 CONVERTER — 247 MODEM — 246 ENCIPHER
VIEWERS MEMORY (245)
KEY MEMORY (244)

# FIG.13

/ #1 \/ #2 \/ #3 \/    \/ #N \          /////

PAY  BROADCASTING
CHANNELS

CONTROL
CHANNEL

# FIG.14

○ —254

# FIG.15

307
TO MULTIPLEXER 43

(+)

NONLINEAR
LOGIC CIRCUIT     303

305

Ks

SHIFT  REGISTER     301

RESET BIT

(+)

# FIG. 16

**BROADCASTING OFFICE** (211)

PROGRAM SIGNAL → SCRAMBLER (213) → MULTI-PLEXER (226) → CONVERTER (241)

ENCIPHER (229)

PROGRAM CODE

RATE CALCULATING SYSTEM (253)

DECODER (251)

KEY MEMORY (252)

ACOUSTIC COUPLER (259) / 258

**RECEIVER** (215)

OFFICE SELECTION SIGNAL

CONVERTER (242) → SEPA-RATOR (228) → DESC-RAMBLER (217) → REPRO-DUCER (243)

254 / 239

ENCIPHER

VIEWERS MEMORY (245)

KEY MEMORY (244)

ENCIPHER (246)

ACOUSTIC COUPLER (257) / 256